# EUROPÄISCHE PATENTSCHRIFT

(11) **EP 3 956 188 B1**
(45) Veröffentlichungstag und Bekanntmachung des Hinweises auf die Patenterteilung: **31.05.2023**
(21) Anmeldenummer: 20715750.4
(22) Anmeldetag: 17.03.2020
(51) Int. Cl.: B60T 8/74

(54) **VERFAHREN UND VORRICHTUNG ZUM AUTOMATISIERTEN NOTSTOPPEN**
METHOD AND DEVICE FOR AN AUTOMATIC EMERGENCY STOP
PROCÉDÉ ET ARRANGEMENT D'ARRÊT D'URGENCE AUTOMATISÉ

(30) Priorität: 16.04.2019 DE 102019002787
(43) Veröffentlichungstag der Anmeldung: 23.02.2022
(73) Patentinhaber: Daimler Truck AG, 70771 Leinfelden-Echterdingen (DE)
(72) Erfinder: AURAND, Tobias, 71640 Ludwigsburg (DE); ZIMMER, Markus, 70771 Leinfelden-Echterdingen (DE); HARTFIEL, Regina, 64297 Darmstadt (DE)
(86) Internationale Anmeldenummer: PCT/EP2020/057253
(87) Internationale Veröffentlichungsnummer: WO 2020/212048

(56) Entgegenhaltungen:
- EP-A1- 2 407 358
- DE-A1-102005 054 754
- DE-A1-102015 205 673
- US-A1- 2017 205 831

## Beschreibung

Die Erfindung betrifft ein Verfahren zum automatisierten Notstoppen eines Kraftfahrzeugs von einer Startgeschwindigkeit in einen Stillstand. Die Erfindung betrifft ferner eine Vorrichtung zur Ausführung eines derartigen Notstoppverfahrens sowie ein mit einer solchen Vorrichtung ausgestattetes Kraftfahrzeug.

Beim Einsatz von Fahrerassistenzsystemen kann bei Eintreffen verschiedener Bedingungen eine automatische Abbremsfunktion des Fahrzeugs ausgelöst werden. So wird bei einigen Fahrerassistenzsystemen während eines automatisierten Fahrbetriebs durch eine sog. "Hands-on" Fahrerkontrolle überprüft, ob der Fahrer mindestens eine Hand am Lenkrad hat und somit jederzeit in der Lage ist, die Fahraufgabe wieder kontrolliert zu übernehmen. Ist diese Bedingung nicht erfüllt, wird der Fahrer zunächst gewarnt und zur erneuten Aufnahme der Lenktätigkeit aufgefordert. Findet dies nicht statt, kann nach einer gewissen Zeit eine automatisierte Funktion eingeleitet werden, insbesondere ein Verfahren zum automatisierten Notstoppen eines Kraftfahrzeugs ("Emergency Stop Assist") ausgeführt werden. Dieses führt dazu, dass das Fahrzeug entsprechend einer festgelegten Verzögerungskurve kontrolliert bis zum Stillstand abgebremst wird.

Bei Auslösung einer Funktion, welche ein Fahrzeug automatisiert abbremst, wird eine bestimmte Verzögerungskurve vorgegeben und eine dementsprechende Verzögerungsanforderung umgesetzt. Bei der Parametrierung der Verzögerungskurve müssen sicherheitsrelevante Aspekte wie der nachfolgende Verkehr, auftretender möglicher Spurverlust und sonstige Risiken in Betracht gezogen werden. Aufgrund dessen sind insbesondere die Anhaltedauer, die für den Abbremsvorgang benötigt wird, sowie der dazugehörige Bremsweg bei der Auslegung der Abbremsfunktion von großem Interesse.

Aus der DE 10 2015 015 097 A1 ist ein Notstoppverfahren bekannt, bei dem in mehreren Stufen eine Bremsverzögerung immer weiter erhöht wird, beispielsweise für 5 s mit 0,3 m/s², danach für 10 s auf 1,3 m/s², danach auf 3 m/s². Dabei erfolgt die Auslösung, wenn eine Sensorik die Fahruntüchtigkeit des Fahrers feststellt.

Die DE 11 2014 005 045 T5 und die DE 10 2016 224 157 A1 offenbaren Notstoppverfahren für Kraftfahrzeuge bei Feststellung der Fahruntüchtigkeit des Fahrers ohne nähere Informationen zum Verzögerungsverlauf des jeweiligen Notstoppverfahrens.

Aus der DE 10 2015 205 673 A1 ist ein Verfahren zum automatischen Nothalt eines Kraftfahrzeugs bis zum Stillstand mittels mindestens einer Bremsvorrichtung des Kraftfahrzeugs bekannt. Die Bremsvorrichtung wird dabei so angesteuert, dass die Verzögerung in mehreren Phasen durchgeführt wird.

Aufgabe der Erfindung ist es, ein Notstoppverfahren und eine Vorrichtung zur Ausführung des Notstoppverfahrens bereitzustellen, das bzw. die für möglichst alle Situationen und Geschwindigkeitsbereiche eine sichere, automatisierte Abbremsung bis zum Stillstand ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe wird gemäß Anspruch 1 dadurch gelöst, dass die Bremseinrichtung betätigt wird, um ein aus mindestens zwei Verzögerungsphasen bestehendes Verzögerungsprofil auszuführen, wobei während einer Verzögerungszunahmephase die Verzögerung bis zu einer Grenzverzögerung erhöht wird und während einer bis zum Stillstand dauernden Verzögerungsabnahmephase die Verzögerung bis auf Null reduziert wird, wobei die zeitlichen Verläufe der Verzögerung während der Verzögerungszunahme und der Verzögerungsabnahme zumindest abschnittsweise als Polynome n-ter Ordnung, mit n > 0, abhängig von der Startgeschwindigkeit (v0) derart bestimmt werden, dass eine Anhaltedauer eine vorgegebene Mindestanhaltedauer nicht unterschreitet und ein während der Anhaltedauer zurückgelegter Weg, auch Bremsweg genannt, einen vorgegebenen Maximalanhalteweg nicht überschreitet. Die Anhaltedauer repräsentiert dabei eine für das Notstoppen benötigte Zeitdauer, d.h. die Zeitdauer von Beginn der Betätigung der Bremseinrichtung bis zum Erreichen des Stillstands.

Auf diese Weise wird einerseits erreicht, dass das Fahrzeug frühestens nach Ablauf der Mindestanhaltedauer, beispielsweise frühestens nach 10 s, zum Stillstand kommt. Die Mindestanhaltedauer wirkt damit direkt auf die Maximalverzögerung. Dies ist vorteilhaft, weil damit nachfolgenden Verkehrsteilnehmern ausreichend Zeit zur Verfügung steht, die Abbremsung des abbremsenden Fahrzeugs rechtzeitig zu erkennen und darauf reagieren zu können. Die Mindestanhaltedauer erlaubt auch dem Fahrzeugführer eine ausreichend lange Zeit zur Erfassung der Situation und zum Ergreifen gegebenenfalls notwendiger Gegenmaßnahmen, z.B. Abbruch des Notstoppens oder zur Lenkung auf einen ggf. vorhandenen Standstreifen. Hierdurch kann gewährleistet werden, dass der Fahrer nicht durch den Notstoppvorgang überrascht wird. Andererseits wird erreicht, dass das Fahrzeug bis zum Erreichen des Stillstands eine Wegstrecke durchfährt, die nicht länger ist als der vorgegebene Maximalanhalteweg, bspw. nicht länger ist als 500 m. Dies ist vorteilhaft, denn ein zu langer Anhalteweg, auch Bremsweg genannt, könnte in Situationen, in denen der Fahrer das Fahrzeug beispielsweise aus gesundheitlichen Gründen nicht mehr selbst kontrollieren kann, zu einem Sicherheitsrisiko werden.

Um stets mindestens eine bestimmte Mindestanhaltedauer zu erreichen, kann eine Verzögerungsanforderung durch zwei Möglichkeiten definiert werden: Zum einen kann eine Parametrierung der Verzögerungs-Rampensteigung erfolgen. Zum anderen kann jedoch auch eine Parametrierung des maximalen Verzögerungswertes (der Grenzverzögerung) eingestellt werden. Beide Möglichkeiten können separat oder auch in Kombination zusammen zum Einsatz kommen.

Auf diese Weise kann ein für die jeweilige Startgeschwindigkeit (das ist die Geschwindigkeit, bei der das Notstoppverfahren ausgelöst wird) optimales Verzögerungsprofil definiert werden, das die vorgegebenen Randbedingungen, nämlich sowohl eine Mindestanhaltedauer als auch einen Maximalanhalteweg, einhält. Das Verzögerungsprofil zerfällt in mindestens zwei Verzögerungsphasen, in denen zunächst die Verzögerung (negative Beschleunigung) ansteigt und danach wieder abfällt. Dabei können die Kurvenabschnitte des Verzögerungsprofils als Polynome n-ter Ordnung, mit n > 0 definiert werden. Im einfachsten Fall (n = 1) handelt es sich um geneigte a-t-Geraden, also um jeweils Phasen konstanter Rucke (zeitliche Ableitung der Beschleunigung). In diesem Fall sieht das a-t-Diagramm wie ein (umgekipptes) Spitzdach aus. Es können alternativ auch Polynome höherer Ordnungen zur Anwendung gelangen, die beispielsweise an eine Sinus-Halbwelle angenähert sind. Sofern die Startgeschwindigkeit einen oberen Grenzwert nicht überschreitet, lassen sich durch Bestimmung eines geeigneten Ruck-Betrages, der (vorzugsweise aber nicht notwendig) für die Verzögerungszunahmephase und die Verzögerungsabnahmephase gleich ist, die Randbedingungen einhalten. Sofern die Startgeschwindigkeit allerdings zu groß wird, würde bei der Einteilung in zwei Verzögerungsphasen die Grenzverzögerung (also die beim Profil am Knickpunkt auftretende Verzögerung) für die Fahrzeuginsassen unzulässig hoch werden. Die Verzögerungsprofile können auch abschnittsweise jeweils aus mehreren Polynomen n-ter Ordnung, insbesondere aus mehreren Geradenabschnitten zusammengesetzt sein, wobei deren Parameter vorteilhafterweise in einer Look-up-Tabelle zum Abrufen bereitgestellt werden.

Daher wird gemäß einer vorteilhaften Weiterbildung zwischen der Verzögerungszunahmephase und der Verzögerungsabnahmephase eine Verzögerungshaltephase durchlaufen, in welcher die Verzögerung im Wesentlichen der Grenzverzögerung entspricht, insbesondere von der Grenzverzögerung um nicht mehr als um einen vorgegebenen Wert, beispielsweise um nicht mehr als 20% der Grenzverzögerung, abweicht. Im einfachsten Fall bleibt die Verzögerung während der Verzögerungshaltephase konstant. In diesem Fall ergibt sich für das Verzögerungsprofil eine kantige Wannenform mit zwei Knickpunkten am Anfang und Ende der Verzögerungshaltephase. Hierdurch entstehen für die Festlegung des Verzögerungsprofils zwei weitere Freiheitsgrade, nämlich die Dauer der Verzögerungshaltephase und die Größe der Grenzverzögerung. Es kann also - vorzugsweise aber nicht notwendig bei konstanten Ruckwerten in den Zunahme- und Abnahmephasen - entweder für eine länger dauernde Verzögerungshaltephase mit geringerer Grenzverzögerung oder mit kürzerer Verzögerungshaltephase mit einer höheren Grenzverzögerung abgebremst werden. Im erstgenannten Fall wird sich der Anhalteweg verlängern, was unproblematisch ist, so lange der Maximalanhalteweg nicht überschritten wird.

Gemäß einer vorteilhaften Weiterbildung der Erfindung ist die Grenzverzögerung eine Funktion der Startgeschwindigkeit, die eine Mindestverzögerung überschreitet, damit der Fahrer bemerkt, dass autonom abgebremst wird. Die Mindestverzögerung kann vorzugsweise bei etwa 0,7 bis 0,8 m/s² liegen. Es ist gleichermaßen vorteilhaft, eine Maximalverzögerung festzulegen, vorzugsweise im Bereich von 1,2 m/s² bis 1,8 m/s², um sicherzustellen, dass die Fahrzeuginsassen nicht unnötig hohen Bremsbeschleunigungen ausgesetzt sind.

Sofern die Startgeschwindigkeit jedoch so hoch ist, dass bei Einhalten der Maximalverzögerung in der Verzögerungshaltephase der Maximalanhalteweg überschritten würde, ist es nötig, die Ruckwerte während der Verzögerungszu- und -abnahmephasen zu erhöhen und/oder die Grenzverzögerung während der Verzögerungshaltephase über den Wert der Maximalverzögerung hinaus soweit zu erhöhen, dass der Maximalanhalteweg eingehalten wird.

Gemäß einer vorteilhaften Weiterbildung der Erfindung nimmt die Verzögerung während der Verzögerungszunahmephase mit einem Zunahmeruck zu, der zwischen einem Mindest-Zunahmeruck und einem Maximal-Zunahmeruck gewählt wird, wobei der Mindest-Zunahmeruck vorzugsweise zwischen 0,4 und 0,5 m/s³, und der Maximal-Zunahmeruck zwischen 0,7 und 0,8 m/s³ liegt.

Gemäß einer vorteilhaften Weiterbildung der Erfindung nimmt die Verzögerung während der Verzögerungsabnahmephase mit einem Abnahmeruck ab, der zwischen einem Mindest-Abnahmeruck und einem Maximal-Abnahmeruck gewählt wird, wobei der Mindest-Abnahmeruck vorzugsweise zwischen -0,4 und -0,5 m/s³, und der Maximal-Abnahmeruck zwischen -0,7 und -0,8 m/s³ liegt.

Ein bevorzugtes Notstoppverfahren für eine Startgeschwindigkeit, die unterhalb der oben genannten Grenzgeschwindigkeit liegt, bei der trotz Wahl der jeweiligen Maximalwerte für Rucke und Grenzbeschleunigung der Maximalanhalteweg überschritten wird, ist durch folgende Merkmale gekennzeichnet:
1. Bei einer Startgeschwindigkeit unterhalb einer unteren Grenzgeschwindigkeit wird die Mindestverzögerung als Grenzverzögerung und die Dauer der Verzögerungshaltephase als Funktion der Startgeschwindigkeit bestimmt, wobei die Anhaltedauer die Mindestanhaltedauer unterschreiten kann. Die untere Grenzgeschwindigkeit liegt etwa im Bereich von 10 km/h. In diesem untersten Geschwindigkeitsbereich macht es wenig Sinn, die Verzögerung so gering zu halten, dass die Mindestanhaltedauer von insbesondere 10 s eingehalten wird, weil die Verzögerung dabei so gering ausfallen würde, dass der Fahrer die Aktivierung des Notstoppverfahrens möglicherweise nicht wahrnimmt. Für diesen Bereich einer sehr niedrigen Geschwindigkeit können die Ruckwerte erhöht werden, um den Bremsvorgang für den Fahrzeugführer spürbarer zu gestalten, und/oder die Dauer der Verzögerungshaltephase verringert werden, so der Stillstand mehrere Sekunden vor Ablauf der Mindestanhaltedauer erreicht wird. Die Grenzverzögerung liegt in diesem Fall beispielsweise bei 0,75 m/s².
2. Bei einer Startgeschwindigkeit oberhalb der unteren Grenzgeschwindigkeit und unterhalb einer mittleren Grenzgeschwindigkeit wird die Grenzverzögerung als Funktion der Startgeschwindigkeit so bestimmt, dass die Mindestanhaltedauer nicht unterschritten wird. In diesem unteren Geschwindigkeitsbereich ist die einstellbare Variable die Grenzverzögerung, die so gewählt wird, dass stets mit der Mindestanhaltedauer der Bremsvorgang abgeschlossen ist, d.h. der Stillstand erreicht wird. Der Maximalanhalteweg wird dabei bei weitem nicht erreicht.
3. Bei einer Startgeschwindigkeit oberhalb der mittleren Grenzgeschwindigkeit und unterhalb der oberen Grenzgeschwindigkeit entspricht die Grenzverzögerung während der Verzögerungshaltephase der Maximalverzögerung und die Dauer der Verzögerungshaltephase wird als Funktion der Startgeschwindigkeit bestimmt. In diesem oberen Geschwindigkeitsbereich entsprechen die Ruckwerte vorzugsweise den Maximalwerten (z.B. +/- 0,75 m/s³) und die einstellbare Variable ist die Länge der Verzögerungshaltephase. Das Fahrzeug hält also später als die Mindestanhaltedauer. Bei Erreichen der oberen Grenzgeschwindigkeit wird in diesem Fall gerade der Maximalanhalteweg erreicht.
4. Bei einer Startgeschwindigkeit oberhalb der oberen Grenzgeschwindigkeit wäre bei Einhaltung der Maximalwerte für die Ruckwerte und die Grenzverzögerung der Maximalanhalteweg nicht mehr einzuhalten. Daher wird in diesem Geschwindigkeitsbereich die Grenzverzögerung über die vorgegebene Maximalverzögerung hinaus erhöht (insbesondere auf etwa 2 bis 3 m/s²) und/oder der Zunahmeruck und/oder der Abnahmeruck wird über den jeweiligen Maximalwert gesetzt. Diese Ruck- bzw. Grenzverzögerungswerte werden als Funktion der Startgeschwindigkeit derart bestimmt, dass der Maximalanhalteweg nicht überschritten wird.

Gemäß einer vorteilhaften Weiterbildung der Erfindung sind also der Zunahmeruck und der Abnahmeruck nicht konstant, sondern diese werden als Funktion der Startgeschwindigkeit gewählt. Es können die Werte vorzugsweise betragsmäßig gleich sein oder aber auch verschieden groß gewählt werden. Auch müssen die Ruckwerte während der Verzögerungszunahmephase und der Verzögerungsabnahmephase nicht konstant sein (Verzögerungsprofil als Polynom erster Ordnung) sondern können andere Kurvenverläufe annehmen, insbesondere einer Sinuskurve angenähert sein.

Gemäß einer vorteilhaften Weiterbildung der Erfindung wird nach Auslösung des Notstoppverfahrens vor der Verzögerungszunahmephase zunächst eine Rollphase ausgeführt, in der ein Antriebsdrehmoment der Antriebseinrichtung des Kraftfahrzeugs auf Null gesetzt wird und gegebenenfalls eine Bremsbetätigung allein zu dem Zweck erfolgt, eine Fahrzeugbeschleunigung aufgrund von externen Kräften, beispielsweise bei einer abschüssigen Fahrbahn oder bei Rückenwind, zu unterbinden. Hierdurch wird dem Fahrer Zeit gewährt, auf eine Warnung zu reagieren, bevor das Fahrzeug automatisiert verzögert wird.

An diese Rollphase schließt sich dann unmittelbar die Verzögerungszunahmephase an. Vorzugsweise beträgt die Dauer der Rollphase etwa 0,5 s bis 1,5 s. Die Dauer der Rollphase kann in die Mindestanhaltedauer eingerechnet werden, so dass sich die verfügbare Mindestbremsdauer entsprechend verkürzt. Wenn sich das Fahrzeug auf einem horizontalen oder ansteigenden Untergrund befindet, muss während der Rollphase keinerlei Bremsbetätigung erfolgen. Wenn sich das Fahrzeug hingegen auf einer abschüssigen Fahrbahn befindet, erfolgt insoweit ein Bremseingriff, dass die Geschwindigkeit während der Rollphase nicht weiter ansteigt.

Sofern das Fahrzeug zum Stillstand gekommen ist, wird gemäß einer vorteilhaften Weiterbildung eine Parkbremse in Eingriff gesetzt, damit sich das Fahrzeug nicht unbeabsichtigt (beispielsweise auf einer nicht-ebenen Stelle) wieder durch Hangabtrieb eigenständig in Bewegung setzt.

Die der Erfindung zugrundeliegende Aufgabe wird ferner durch eine Vorrichtung zur Ausführung einer der Ausführungen des oben beschriebenen Notstoppverfahrens gelöst, die mit einem Sensor zur Erfassung der Fahrzeuggeschwindigkeit sowie mit einer Steuereinrichtung für eine Antriebseinrichtung des Kraftfahrzeugs sowie mit einer Steuereinrichtung für eine Bremsanlage verbindbar ist.

Gemäß einer vorteilhaften Weiterbildung dieser Ausbildung umfasst die Vorrichtung einen Schalter zur manuellen Auslösung und/oder Beendigung des Notstoppverfahrens oder eine Fahrersensorik , mittels derer feststellbar ist, ob ein Fahrzeugfahrer die Kontrolle über das Fahrzeug innehat. Auf diese Weise kann der Fahrer jederzeit wieder die Kontrolle über das Fahrzeug übernehmen und das Notstoppverfahren abstellen.

Das Notstoppverfahren wird vorteilhafterweise automatisch eingeleitet, beispielweise wenn eine erwartete Fahrerreaktion ausbleibt (z.B. der Fahrer reagiert nicht auf eine Warnung wie eine Übernahmeaufforderung oder eine "Hands-off-Warnung") oder wenn der Fahrer nicht bereit oder unfähig ist, die Fahrzeugführung zu übernehmen (z.B. bei Ohnmacht oder Herzinfarkt). Das Notstoppverfahren kann aber auch manuell vom Fahrer oder von einem Insassen durch Bedienen des Notstopp-Schalters eingeleitet werden. Somit kann auch ein Beifahrer und/oder Fahrgast das Fahrzeug in Notsituationen sofort automatisiert in den Stillstand bringen, wenn der Fahrer plötzlich die Fahrzeugkontrolle verliert.

Gemäß einer weiteren bevorzugten Weiterbildung wird eine Unterschreitung der Mindestanhaltedauer oder eine Überschreitung des Maximalanhalteweges vom System zugelassen, wenn dieses erkennt, dass die Einhaltung dieser Randbedingungen zu einem Anhalten des Fahrzeugs an einer kritischen Stelle (z.B. in einer Kreuzung) führen würde. Dazu ist die Vorrichtung mit einem Navigationssystem verbindbar, mittels dessen zu Beginn des Notstoppvorgangs die Anhaltestelle bestimmt werden kann.

Weitere Vorteile, Merkmale und Einzelheiten ergeben sich aus der nachfolgenden Beschreibung, in der unter Bezug auf die Zeichnungen ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: ein Verzögerungs-Zeit-Diagramm eines Verzögerungsprofils bei einem erfindungsgemäßen Notstoppverfahren;
- Figur 2:: ein Verzögerungs-Zeit-Diagramm eines Verzögerungsprofils bei einer sehr niedrigen Startgeschwindigkeit;
- Figur 3:: ein Verzögerungs-Zeit-Diagramm eines Verzögerungsprofils bei einer niedrigen Startgeschwindigkeit;
- Figur 4:: ein Verzögerungs-Zeit-Diagramm eines Verzögerungsprofils bei einer mittleren Startgeschwindigkeit;
- Figur 5:: ein Verzögerungs-Zeit-Diagramm eines Verzögerungsprofils bei einer hohen Startgeschwindigkeit;
- Figur 6:: ein Blockschaltbild einer Vorrichtung zur Durchführung des erfindungsgemäßen Notstoppverfahrens.

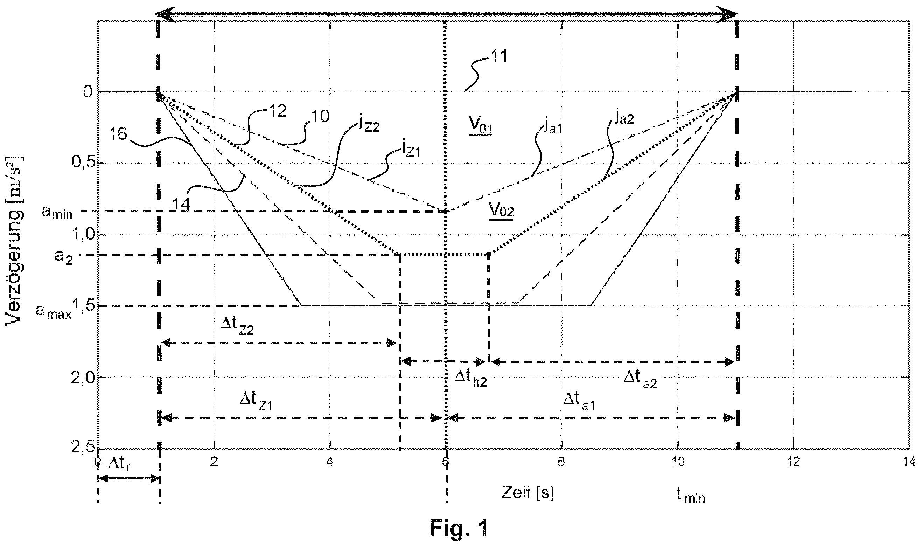

Figur 1 zeigt ein Verzögerungs-Zeit-Diagramm eines Verzögerungsprofils bei einem erfindungsgemäßen Notstoppverfahren. Die Abszisse ist die Zeit in Sekunden, die Ordinate die Verzögerung in [m/s²]. Auf der Zeitachse ist ganz links die Rollphase Δtᵣ dargestellt, der sich für verschiedene Verzögerungsprofile verschiedene Zeitdauern Δt_{z1}, Δt_{z2}, Δt_{z3}, Δt_{z4} für die Verzögerungszunahmephase Δt_{z} anschließt.

Im Verzögerungsprofil 10 (strichpunktierte Linie) erfolgt eine konstante Zunahme der Verzögerung ausgehend von 0 bis zu dem Wert der Mindestverzögerung aₘᵢₙ von 0,75 m/s². Der Wert des Zunahmeruckes j_{z1} beträgt 0,75 m/s² / 6 s, mithin j_{z1} = 0,125 m/s³. Bei diesem Verzögerungsprofil 10 für sehr niedrige Startgeschwindigkeiten v₀ schließt sich an die Verzögerungszunahmephase Δt_{z1} eine gleich lange Verzögerungsabnahmephase Δtₐ₁ mit dem betragsmäßig gleich großen Abnahmeruck jₐ₁ an. Die gesamte Dauer des Bremsvorgangs ergibt sich aus der Summe der Phasen Δtᵣ + Δt_{z1} + Δtₐ₁ und ergibt im dargestellten Beispiel 11 s. Die zugeordnete Startgeschwindigkeit v₀₁ lässt sich als die Fläche zwischen der Beschleunigungs-Nulllinie 11 und den beiden Linien j_{z1}, und jₐ₁, also der Fläche des dadurch gebildeten Dreiecks auffassen.

Im Verzögerungsprofil 12 (punktierte Linie) erfolgt nach Ende der Rollphase Δtᵣ eine konstante Zunahme der Verzögerung ausgehend von 0 bis zu einem Verzögerungswert a₂ von etwa 1,1 m/s². Der Wert des Zunahmeruckes j_{z2} beträgt etwa 1,1 m/s² / 5,3 s, mithin j_{z2} = 0,21 m/s³. Bei diesem Verzögerungsprofil 12 für etwas höhere Startgeschwindigkeiten v₀₂ schließt sich an die Verzögerungszunahmephase Δt_{z2} eine Verzögerungshaltephase Δtₕ₂ an, der eine Verzögerungsabnahmephase Δtₐ₂ folgt. Die gesamte Dauer des Bremsvorgangs ergibt sich aus der Summe der Phasen Δtᵣ + Δt_{z2} + Δtₕ₂ + Δtₐ₂ und ergibt erneut 11s. Die zugeordnete Startgeschwindigkeit v₀₂ lässt sich als die Fläche zwischen der Beschleunigungs-Nulllinie und dem durch die drei Linien j_{z2}, a₂ und jₐ₂ aufgespannten Trapez definieren.

Um eine Abbremsdauer von 11s zu erreichen, kann also der Ruck bei der Verzögerungszu- und -abnahme j_{z2} und jₐ₂ erhöht werden, wodurch automatisch die Verzögerungshaltephase Δtₕ₂ entsteht.

Bei einer noch höheren Startgeschwindigkeit wird im Verzögerungsprofil 14 (gestrichelte Linie) der Ruck noch weiter vergrößert, und da die Verzögerung die Maximalverzögerung aₘₐₓ nicht überschreiten soll, ergibt sich automatisch eine Verbreiterung der Verzögerungshaltephase Δtₕ. Gleiches gilt für das Verzögerungsprofil 16 (durchgezogene Linie) für eine noch höhere Startgeschwindigkeit.

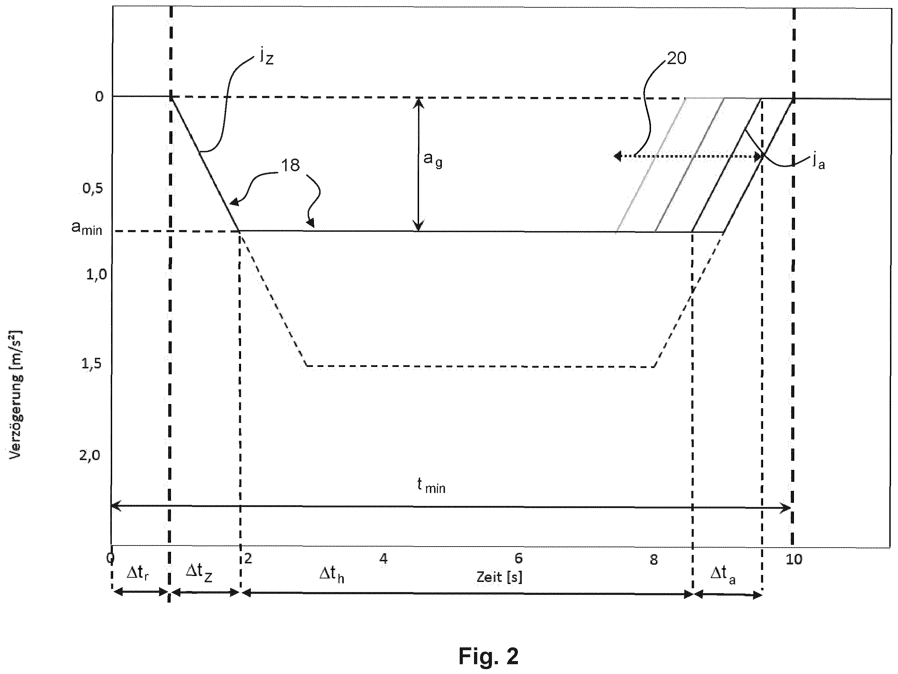

In Figur 2 ist ein alternatives Verzögerungsprofil 18 (mit einer durchgezogenen Linie) für sehr geringe Startgeschwindigkeiten dargestellt, die unterhalb einer unteren Grenzgeschwindigkeit v₁ liegen. Das Verzögerungsprofil 18 geht im Unterschied zu den Verzögerungsprofilen 10, 12, 14, 16 von Figur 1 von konstanten Zunahmeruckwerten j_{z} und Abnahmeruckwerten jₐ aus, was durch Linien mit konstanter Steigung darstellbar ist.

Ausgehend von dem Grundsatz, dass die Grenzverzögerung a_{g} nicht kleiner sein soll als die vorgegebene Mindestverzögerung aₘᵢₙ bewirkt das Verzögerungsprofil 18 über die Zeit integriert eine zu starke Abbremsung des Fahrzeugs, so dass dieses zu einem plötzlichen Stillstand kommen würde. Daher wird die Verzögerungshaltephase Δtₕ soweit verkürzt, dass in der Verzögerungsabnahmephase Δtₐ eine sanfte Beendigung des Abbremsvorgangs erreicht wird, auch wenn dies vor der Mindestanhaltedauer tₘᵢₙ (im dargestellten Beispiel bei etwa 10 s) geschieht. Je geringer die Startgeschwindigkeit ist, umso mehr verkürzt sich die Verzögerungshaltephase Δtₕ und damit wandert die Verzögerungsabnahmephase Δtₐ in der mit 20 bezeichneten Richtung.

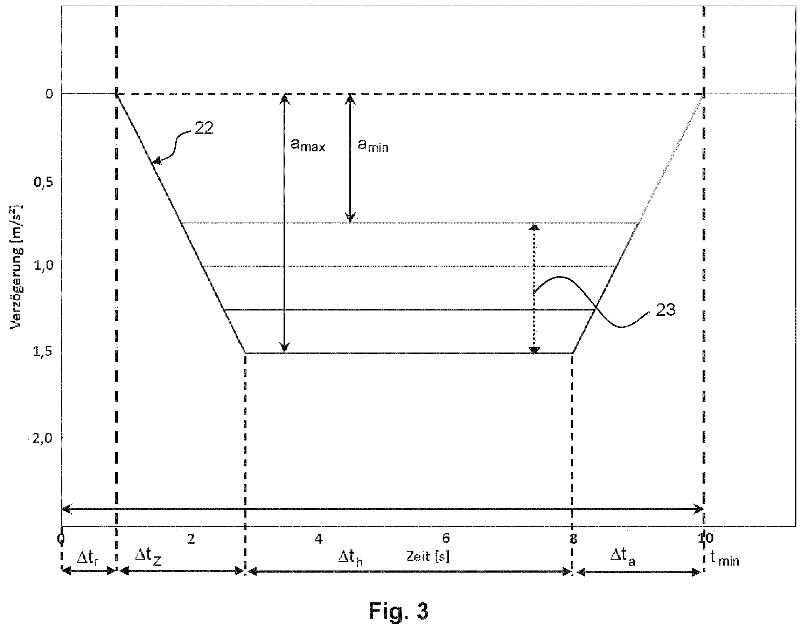

In Figur 3 ist ein Verzögerungsprofil 22 für einen Bereich niedriger Startgeschwindigkeiten dargestellt, die höher sind als die Grenzgeschwindigkeit v₁, bei der gerade eben die Mindestanhaltedauer tₘᵢₙ erreicht wird. Hierbei wird nun die Grenzverzögerung a_{g} als Funktion der Startgeschwindigkeit bestimmt, wobei mit zunehmender Startgeschwindigkeit die Grenzverzögerung a_{g} ansteigt. Bei einer mittleren Startgeschwindigkeit v₂ erreicht die Grenzverzögerung a_{g} die Maximalverzögerung aₘₐₓ, wobei im gesamten Geschwindigkeitsbereich zwischen v₁ und v₂ stets die Mindestanhaltedauer tₘᵢₙ erreicht wird (also genau innerhalb dieses Zeitraums das Fahrzeug zum Stillstand abgebremst wird), wobei sich die Grenzverzögerung a_{g} in dem mit Bezugszeichen 23 bezeichneten Bereich ändert.

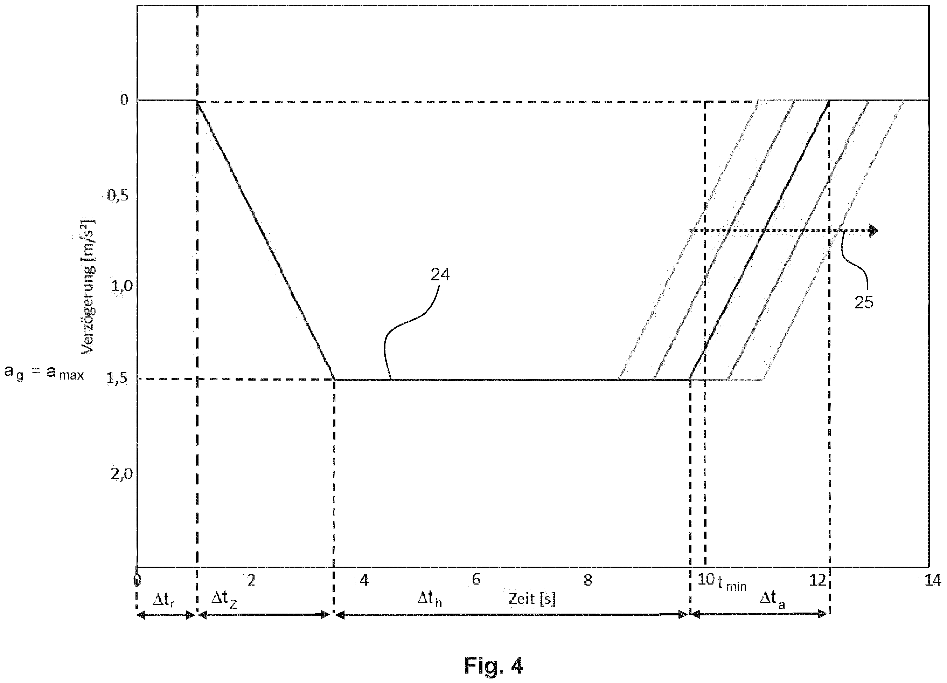

In Figur 4 ist ein Verzögerungsprofil 24 für einen Bereich mittlerer Startgeschwindigkeiten dargestellt, die höher sind als die Grenzgeschwindigkeit v₂, bei der das Fahrzeug bei Erreichen der Mindestanhaltedauer tₘᵢₙ zum Stillstand gebracht ist. Bei höheren Startgeschwindigkeiten v₀ > v₂ ist eine längere Anhaltedauer nötig, um das Fahrzeug zum Stillstand zu bringen, wobei der Bremsweg länger wird. Dabei wird die Verzögerungshaltephase Δtₕ entsprechend als Funktion der Startgeschwindigkeit verlängert, was durch den Pfeil 25 angedeutet wird. Begrenzt wird das Verzögerungsprofil 24 durch eine obere Grenzgeschwindigkeit v₃, bei welcher der Bremsweg den Maximalanhalteweg sₘₐₓ erreicht.

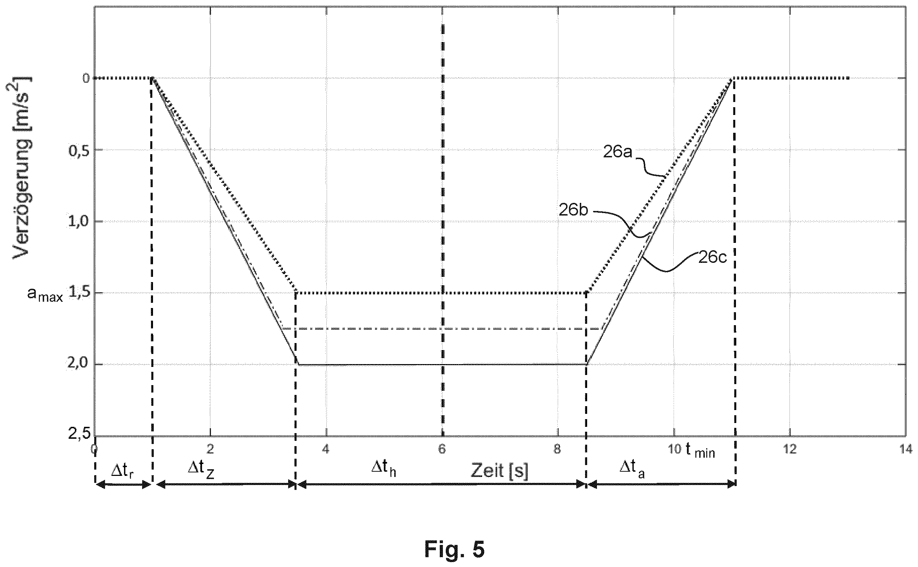

In Figur 5 sind mehrere Verzögerungsprofile 26a, 26b, 26c für einen Bereich hoher Startgeschwindigkeiten v₀ dargestellt, die höher sind als die Grenzgeschwindigkeit v₃, bei welcher der Bremsweg den Maximalanhalteweg sₘₐₓ erreicht. Dieser Maximalanhalteweg sₘₐₓ soll ja nicht überschritten werden, so dass nunmehr stärkere Grenzverzögerungen zum Einsatz kommen müssen, welche die Maximalverzögerung aₘₐₓ überschreiten. Zusätzlich ist es zweckmäßig, auch die Ruckwerte bei der Verzögerungszunahmephase Δt_{z} und der Verzögerungsabnahmephase Δtₐ zu erhöhen, wie bei den Verzögerungsprofilen 26b, 26c dargestellt.

In der folgenden Tabelle 1 sind für verschiedene Startgeschwindigkeiten v₀ die sich ergebenden Werte für die Rollphase Δtᵣ, die Verzögerungszunahmephase Δt_{z} , die Zunahmeruck j_{z}, die Verzögerungshaltephase Δtₕ, die Grenzverzögerung a_{g}, die Verzögerungsabnahmephase Δtₐ, der Abnahmeruck jₐ, die Gesamtdauer des Bremsvorgangs t_{b} = Δtᵣ + Δt_{z} + Δtₕ + Δtₐ, und der sich ergebende Bremsweg s tabellarisch dargestellt.

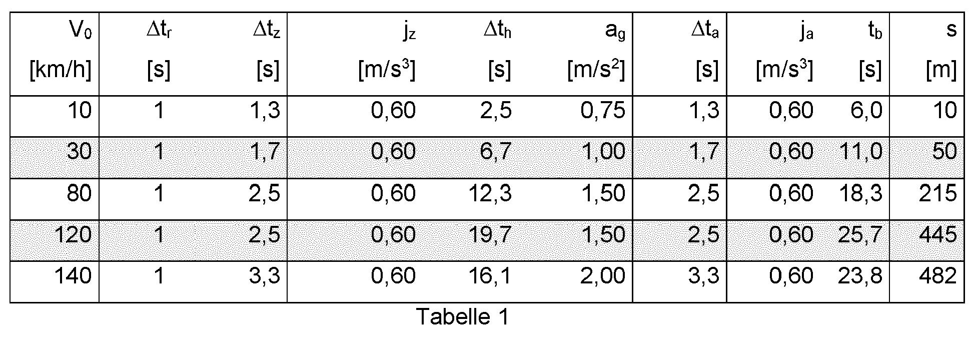

In der folgenden Tabelle 2 sind für die gleiche Startgeschwindigkeiten v₀ = 30 km/h zwei unterschiedliche Verzögerungsprofile im Vergleich dargestellt, und zwar in der oberen

Zeile ein Verzögerungsprofil mit größeren Ruckwerten j_{z}, jₐ und einer geringeren Grenzverzögerung a_{g}.

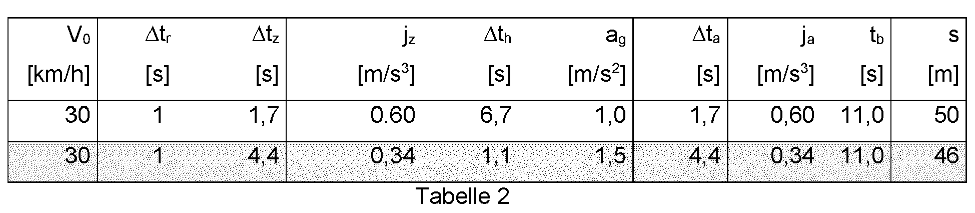

In der folgenden Tabelle 3 sind in drei Zeilen Werte für die Grenzgeschwindigkeiten v₁, v₂, v₃ und die dazugehörigen Parameter dargestellt:

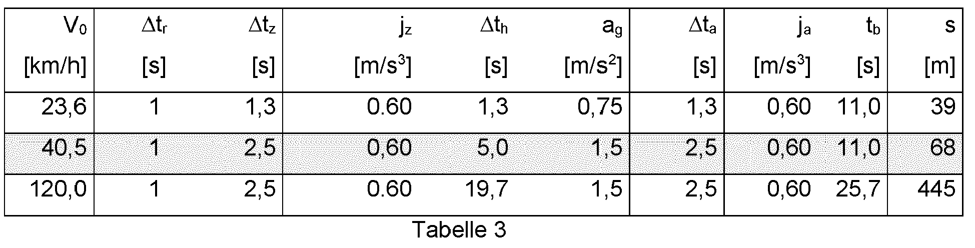

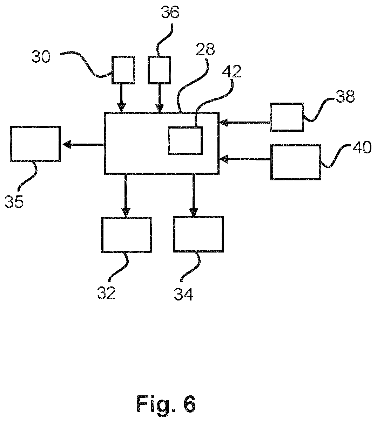

In Figur 6 ist eine Vorrichtung 28 zur Durchführung des Verfahrens dargestellt, die mit einem Fahrzeuggeschwindigkeitssensor 30 zur Erfassung der Startgeschwindigkeit v₀ verbunden ist. Die Vorrichtung 28 hat einen Ausgang zur Ansteuerung einer Steuereinrichtung 32 für eine Antriebseinrichtung des Kraftfahrzeugs, um die Antriebseinrichtung drehmomentfrei zu stellen. Die Vorrichtung 28 hat einen weiteren Ausgang zur Ansteuerung einer Steuereinrichtung 34 für eine Bremsanlage sowie einen Ausgang zur Ansteuerung einer Steuereinrichtung 35 für eine Feststellbremsanlage. Damit wird die Bremsanlage gemäß dem erfindungsgemäßen Verfahren angesteuert. Die dabei wesentlichen Verzögerungswerte können entweder durch Differentiation der Geschwindigkeitswerte des Sensors 30 gewonnen werden, oder die Vorrichtung 28 kann mit einem separaten Beschleunigungssensor 36 verbunden sein.

Die Vorrichtung 28 ist ferner mit einem Schalter 38 zur manuellen Auslösung und/oder Beendigung des Notstoppverfahrens verbunden sowie mit einer Fahrersensorikeinrichtung 40 verbindbar. Sowohl mittels des Schalters 38 als auch von der Fahrersensorikeinrichtung 40 ist das erfindungsgemäße Notstoppverfahren aktivierbar, wobei in diesem Moment vom Geschwindigkeitssensor 30 die aktuelle Startgeschwindigkeit v₀ gemessen wird und mit den in einer Berechnungseinheit 42 der Vorrichtung 28 abgelegten Werten für die Grenzgeschwindigkeiten v₁, v₂, v₃ verglichen wird. Die Berechnungseinheit 42 berechnet daraus je nach der ermittelten Startgeschwindigkeit v₀ das entsprechende Verzögerungsprofil und steuert die Steuereinrichtung 34 für die Bremsanlage entsprechend an, wobei die sich ergebenden Beschleunigungswerte von dem Beschleunigungssensor 36 ermittelt werden. Es ist alternativ auch möglich, anstelle der Berechnungseinheit 42 eine Look-up-Tabelle mit vorgespeicherten Werten zu verwenden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Der Schutzumfang der Erfindung ist nur durch die Ansprüche beschränkt.

## Patentansprüche

1. Verfahren zum automatisierten Notstoppen eines Kraftfahrzeugs von einer Startgeschwindigkeit (v₀) in einen Stillstand mittels mindestens einer Bremseinrichtung des Kraftfahrzeugs, wobei die Bremseinrichtung betätigt wird, um ein aus mindestens zwei Verzögerungsphasen (10) bestehendes Verzögerungsprofil auszuführen, wobei während einer Verzögerungszunahmephase (Δt_{z}) die Verzögerung bis zu einer Grenzverzögerung (a_{g}) erhöht wird und während einer bis zum Stillstand dauernden Verzögerungsabnahmephase (Δtₐ) die Verzögerung bis auf Null reduziert wird, **dadurch gekennzeichnet, dass** die zeitlichen Verläufe der Verzögerung während der Verzögerungszunahme und der Verzögerungsabnahme mindestens abschnittsweise als Polynome n-ter Ordnung, mit n > 0, abhängig von der Startgeschwindigkeit (v₀) derart bestimmt werden, dass eine Anhaltedauer, die eine für das Notstoppen benötigte Zeitdauer repräsentiert, eine vorgegebene Mindestanhaltedauer (tₘᵢₙ) nicht unterschreitet und ein während der Anhaltedauer zurückgelegter Weg einen vorgegebenen Maximalanhalteweg (sₘₐₓ) nicht überschreitet.

2. Notstoppverfahren nach Anspruch 1, wobei zwischen der Verzögerungszunahmephase (Δt_{z}) und der Verzögerungsabnahmephase (Δtₐ) eine Verzögerungshaltephase (Δtₕ) durchlaufen wird, in welcher die Verzögerung im Wesentlichen der Grenzverzögerung (a_{g}) entspricht, insbesondere von der Grenzverzögerung (a_{g}) nicht um mehr als einen vorgegebenen Wert abweicht.

3. Notstoppverfahren nach Anspruch 1 oder 2, wobei die Grenzverzögerung (a_{g}) eine Funktion der Startgeschwindigkeit (v₀) ist und eine vorgegebene Mindestverzögerung (aₘᵢₙ) überschreitet.

4. Notstoppverfahren nach einem der vorherigen Ansprüche, wobei die Verzögerung während der Verzögerungszunahmephase (Δt_{z}) mit einem Zunahmeruck (j_{z}) zunimmt, der zwischen einem Mindest-Zunahmeruck (j_{zmin}) und einem Maximal-Zunahmeruck (j_{zmax}) gewählt wird, wobei der Mindest-Zunahmeruck (j_{zmin}) vorzugsweise zwischen 0,4 und 0,5 m/s³, und der Maximal-Zunahmeruck (j_{zmax}) zwischen 0,7 und 0,8 m/s³ liegt.

5. Notstoppverfahren nach einem der vorherigen Ansprüche, wobei die Verzögerung während der Verzögerungsabnahmephase (Δtₐ) mit einem Abnahmeruck (jₐ) abnimmt, der zwischen einem Mindest-Abnahmeruck (jₐₘᵢₙ) und einem Maximal-Abnahmeruck (jₐₘₐₓ) gewählt wird, wobei der Mindest-Abnahmeruck (jₐₘᵢₙ) vorzugsweise zwischen -0,4 und -0,5 m/s³, und der Maximal-Abnahmeruck (jₐₘₐₓ) zwischen -0,7 und -0,8 m/s³ liegt.

6. Notstoppverfahren nach Anspruch 5, wobei
- bei einer Startgeschwindigkeit (v₀) unterhalb einer oberen Grenzgeschwindigkeit (v₃) der Zunahmeruck (j_{z}) und der Abnahmeruck (jₐ) konstant gewählt werden und
- bei einer Startgeschwindigkeit (v₀) unterhalb einer unteren Grenzgeschwindigkeit (v₁) die Mindestverzögerung (aₘᵢₙ) als Grenzverzögerung (a_{g}) und die Dauer der Verzögerungshaltephase (Δtₕ) als Funktion der Startgeschwindigkeit (v₀) bestimmt wird, wobei die Anhaltedauer die Mindestanhaltedauer (tₘᵢₙ) unterschreiten kann (18);
- bei einer Startgeschwindigkeit (v₀) oberhalb der unteren Grenzgeschwindigkeit (v₁) und unterhalb einer mittleren Grenzgeschwindigkeit (v₂) die Grenzverzögerung (a_{g}) als Funktion der Startgeschwindigkeit (v₀) so bestimmt wird, dass die Mindestanhaltedauer (tₘᵢₙ) nicht unterschritten wird (22);
- bei einer Startgeschwindigkeit (v₀) oberhalb der mittleren Grenzgeschwindigkeit (v₂) und unterhalb der oberen Grenzgeschwindigkeit (v₃) die Grenzverzögerung (a_{g}) während der Verzögerungshaltephase (Δtₕ) einer Maximalverzögerung (aₘₐₓ) entspricht und die Dauer der Verzögerungshaltephase (Δtₕ) als Funktion der Startgeschwindigkeit (v₀) bestimmt wird (24).

7. Notstoppverfahren nach Anspruch 6, wobei bei einer Startgeschwindigkeit (v₀) oberhalb der oberen Grenzgeschwindigkeit (v₃) die Grenzverzögerung (a_{g}) die Maximalverzögerung (aₘₐₓ), und/oder der Zunahmeruck (j_{z}) und der Abnahmeruck (jₐ) die jeweiligen Maximalwerte (j_{zmax}, jₐₘₐₓ) überschreiten, und diese als Funktion der Startgeschwindigkeit (v₀) derart bestimmt werden, dass der Maximalanhalteweg (sₘₐₓ) nicht überschritten wird (26).

8. Notstoppverfahren nach Anspruch 6 oder 7, wobei der Zunahmeruck (j_{z}) und der Abnahmeruck (jₐ) als Funktion der Startgeschwindigkeit (v₀) gewählt werden.

9. Notstoppverfahren nach einem der vorherigen Ansprüche, wobei nach Auslösung des Notstoppverfahrens vor der Verzögerungszunahmephase (Δt_{z}) eine Rollphase (Δtᵣ) ausgeführt wird, in der ein Antriebsdrehmoment einer Antriebseinrichtung des Kraftfahrzeugs auf Null gesetzt wird und gegebenenfalls eine Bremsbetätigung zu dem Zweck erfolgt, eine Fahrzeugbeschleunigung bedingt durch extern einwirkende Kräfte, insbesondere durch eine abschüssigen Fahrbahn oder durch Rückenwind, zu unterbinden.

10. Vorrichtung (28) zur Ausführung des Notstoppverfahrens nach einem der vorherigen Ansprüche, wobei diese mit einem Sensor (30) zur Erfassung der Fahrzeuggeschwindigkeit sowie mit einer Steuereinrichtung (32) für eine Antriebseinrichtung des Kraftfahrzeugs sowie mit einer Steuereinrichtung (34) für eine Bremsanlage verbindbar ist.

## Claims

1. Method for automated emergency stopping of a motor vehicle from a starting speed (v₀) to a standstill by means of at least one braking device of the motor vehicle, wherein
the braking device is actuated in order to execute a deceleration profile consisting of at least two deceleration phases (10), wherein, during a deceleration increase phase (Δt_{z}), the deceleration is increased to a threshold deceleration (a_{g}) and, during a deceleration decrease phase (Δtₐ) lasting until a standstill is reached, the deceleration is reduced to zero, **characterised in that**, during the deceleration increase and the deceleration decrease, the temporal progressions of the deceleration are at least partially defined as polynomials of the nth order, where n > 0, as a function of the starting speed (v₀), in such a way that a stopping time, which represents a necessary length of time for the emergency stopping, does not fall short of a predetermined minimum stopping time (tₘᵢₙ) and that a distance covered during the stopping time does not exceed a predetermined maximum stopping time (sₘₐₓ).

2. Emergency stopping method according to claim 1,
wherein
between the deceleration increase phase (Δt_{z}) and the deceleration decrease phase (Δtₐ), a deceleration maintenance phase (Δtₕ) is run through, in which the deceleration substantially corresponds to the threshold deceleration (a_{g}), in particular does not deviate from the threshold deceleration (a_{g}) by more than a predetermined value.

3. Emergency stopping method according to claim 1 or 2,
wherein
the threshold deceleration (a_{g}) is a function of the starting speed (v₀) and exceeds a predetermined minimum deceleration (aₘᵢₙ).

4. Emergency stopping method according to one of the preceding claims,
wherein
the deceleration increases during the deceleration increase phase (Δt_{z}) with a jerk increase (j_{z}) that is selected between a minimum jerk increase (j_{zmin}) and a maximum jerk increase (j_{zmax}), wherein the minimum jerk increase (j_{zmin}) preferably lies between 0.4 and 0.5 m/s³, and the maximum jerk increase (j_{zmax}) preferably lies between 0.7 and 0.8 m/s³.

5. Emergency stopping method according to one of the preceding claims,
wherein
the deceleration decreases during the deceleration decrease phase (Δtₐ) with a jerk decrease (jₐ) that is selected between a minimum jerk decrease (jₐₘᵢₙ) and a maximum jerk decrease (jₐₘₐₓ), wherein the minimum jerk decrease (jₐₘᵢₙ) preferably lies between -0.4 and -0.5 m/s³, and the maximum jerk decrease (jₐₘₐₓ) preferably lies between -0.7 and -0.8 m/s³.

6. Emergency stopping method according to claim 5,
wherein
- at a starting speed (v₀) below an upper threshold speed (v₃), the jerk increase (j_{z}) and the jerk decrease (jₐ) are selected to be constant, and
- at a starting speed (v₀) below a lower threshold speed (v₁), the minimum deceleration (aₘᵢₙ) is determined as the threshold deceleration (a_{g}) and the duration of the deceleration maintenance phase (Δtₕ) is determined as a function of the starting speed (v₀), wherein the stopping time can fall below the minimum stopping time (tₘᵢₙ) (18);
- at a starting speed (v₀) above the lower threshold speed (v₁) and below an average threshold speed (v₂), the threshold deceleration (a_{g}) is determined as a function of the starting speed (v₀) in such a manner that the minimum stopping time (tₘᵢₙ) is not fallen short of (22);
- at a starting speed (v₀) above the average threshold speed (v₂) and below the upper threshold speed (v₃), the threshold deceleration (a_{g}) corresponds to a maximum deceleration (aₘₐₓ) during the deceleration maintenance phase (Δtₕ) and the duration of the deceleration maintenance phase (Δtₕ) is determined as a function of the starting speed (v₀) (24).

7. Emergency stopping method according to claim 6,
wherein
at a starting speed (v₀) above the upper threshold speed (v₃), the threshold deceleration (a_{g}), the maximum deceleration (aₘₐₓ) and/or the jerk increase (j_{z}) and the jerk decrease (jₐ) exceed the respective maximum values (j_{zmax}, jₐₘₐₓ), and these are determined as a function of the starting speed (v₀) in such a manner that the maximum stopping distance (sₘₐₓ) is not exceeded (26).

8. Emergency stopping method according to claim 6 or 7,
wherein
the jerk increase (j_{z}) and the jerk decrease (jₐ) are selected as a function of the starting speed (v₀).

9. Emergency stopping method according to one of the preceding claims,
wherein
after initiating the emergency stopping method, a rolling phase (Δtᵣ) is executed before the deceleration increase phase (Δt_{z}), in which rolling phase a drive torque of a drive device of the motor vehicle is set to zero and, if necessary, a brake actuation occurs for the purpose of preventing a vehicle acceleration caused by externally acting forces, in particular by a sloping road or by a tailwind.

10. Device (28) for executing the emergency stopping method according to one of the preceding claims,
wherein
this can be connected with a sensor (30) for detecting the vehicle speed, as well as with a control device (32) for a drive device of the motor vehicle, as well as with a control device (34) for a braking system.

## Revendications

1. Procédé d'arrêt d'urgence automatique d'un véhicule automobile à partir d'une vitesse de départ (v₀) vers un état immobilisé au moyen d'au moins un dispositif de freinage du véhicule automobile,
dans lequel le dispositif de freinage est actionné afin d'exécuter une évolution de la décélération constituée d'au moins deux phases de décélération (10), dans lequel, pendant une phase de croissance de la décélération (Δt_{z}), la décélération est augmentée jusqu'à une décélération limite (a_{g}) et pendant une phase de décroissance de la décélération (Δtₐ) durant jusqu'à l'état d'immobilisation, la décélération est réduite jusqu'à zéro, **caractérisé en ce que** les évolutions dans le temps de la décélération pendant la croissance de la décélération et la décroissance de la décélération sont déterminées au moins par portions sous forme de polynômes d'ordre n, avec n > 0, en fonction de la vitesse de départ (v₀), de telle manière qu'une durée de mise à l'arrêt, qui représente une durée nécessaire pour l'arrêt d'urgence, n'est pas en-dessous d'une durée de mise à l'arrêt minimale (tₘᵢₙ) prédéfinie et un trajet parcouru pendant la durée de mise à l'arrêt ne dépasse pas une distance de mise à l'arrêt maximale (Sₘₐₓ) prédéfinie.

2. Procédé d'arrêt d'urgence selon la revendication 1,
dans lequel une phase de maintien de la décélération (Δtₕ) s'écoule entre la phase de croissance de la décélération (Δt_{z}) et la phase de décroissance de la décélération (Δtₐ), pendant laquelle la décélération correspond essentiellement à la décélération limite (a_{g}), en particulier, ne dévie pas de la décélération limite (a_{g}) d'une valeur prédéfinie.

3. Procédé d'arrêt d'urgence selon la revendication 1 ou la revendication 2,
dans lequel la décélération limite (a_{g}) est une fonction de la vitesse de départ (v₀) et dépasse une décélération minimale (aₘᵢₙ) prédéfinie.

4. Procédé d'arrêt d'urgence selon l'une des revendications précédentes,
dans lequel la décélération augmente pendant la phase de croissance de la décélération (Δt_{z}) avec une poussée de croissance (j_{z}) qui est choisie entre une poussée de croissance minimale (j_{zmin}) et une poussée de croissance maximale (j_{zmax}), où la poussée de croissance minimale (j_{zmin}) se situe de préférence entre 0,4 et 0,5 m/s³, et la poussée de croissance maximale (j_{zmax}) se situe entre 0,7 et 0,8 m/s³.

5. Procédé d'arrêt d'urgence selon l'une des revendications précédentes,
dans lequel la décélération diminue pendant la phase de décroissance de la décélération (Δtₐ) avec une poussée de décroissance (jₐ) qui est choisie entre une poussée de décroissance minimale (jₐₘᵢₙ) et une poussée de décroissance maximale (jₐₘₐₓ), où la poussée de décroissance minimale (jₐₘᵢₙ) se situe de préférence entre -0,4 et -0,5 m/s³, et la poussée de décroissance maximale (jₐₘₐₓ) se situe entre -0,7 et -0,8 m/s³.

6. Procédé d'arrêt d'urgence selon la revendication 5,
dans lequel
- pour une vitesse de départ (v₀) inférieure à une vitesse limite supérieure (v₃), la poussée de croissance (j_{z}) et la poussée de décroissance (jₐ) sont choisies constantes et
- pour une vitesse de départ (v₀) inférieure à une vitesse limite inférieure (v₁), la décélération minimale (aₘᵢₙ) est déterminée comme étant la décélération limite (a_{g}) et la durée de la phase de maintien de la décélération (Δtₕ) est déterminée comme étant une fonction de la vitesse de départ (v₀), où la durée de mise à l'arrêt peut être inférieure à la durée de mise à l'arrêt minimale (tₘᵢₙ) (18) ;
- pour une vitesse de départ (v₀) supérieure à la vitesse limite inférieure (v₁) et inférieure à une vitesse limite moyenne (v₂), la décélération limite (a_{g}) est déterminée comme étant une fonction de la vitesse de départ (v₀) de telle manière que la durée de mise à l'arrêt (tₘᵢₙ) n'est pas dépassée par la limite inférieure (22) ;
- pour une vitesse de départ (v₀) supérieure à la vitesse limite moyenne (v₂) et inférieure à la vitesse limite supérieure (v₃), la décélération limite (a_{g}) pendant la phase de maintien de la décélération (Δtₕ) correspond à une décélération maximale (aₘₐₓ) et la durée de la phase de maintien de la décélération (Δtₕ) est déterminée (24) comme étant fonction de la vitesse de départ (v₀).

7. Procédé d'arrêt d'urgence selon la revendication 6,
dans lequel
pour une vitesse de départ (v₀) supérieure à la vitesse limite supérieure (v₃), la décélération limite (a_{g}) dépasse la décélération maximale (aₘₐₓ), et/ou la poussée de croissance (j_{z}) et la poussée de décroissance (jₐ) dépassent les valeur maximales (j_{zmax}, jₐₘₐₓ) respectives et celles-ci sont déterminées comme étant fonction de la vitesse de départ (v₀) de telle sorte que la distance de mise à l'arrêt maximale (sₘₐₓ) n'est pas dépassée (26).

8. Procédé d'arrêt d'urgence selon la revendication 6 ou la revendication 7,
dans lequel
la poussée de croissance (j_{z}) et la poussée de décroissance (jₐ) sont choisies en fonction de la vitesse de départ (v₀).

9. Procédé d'arrêt d'urgence selon l'une des revendications précédentes,
dans lequel, après le déclenchement du procédé d'arrêt d'urgence avant la phase de croissance de la décélération (Δt_{z}), une phase de roulis (Δtᵣ) est exécutée, dans laquelle un couple d'entraînement d'un dispositif d'entraînement du véhicule automobile est réglé sur zéro et éventuellement un actionnement de freinage a lieu à cette fin pour asservir une accélération du véhicule conditionnée par des forces agissant de l'extérieur, notamment par une voie de circulation en pente ou par un vent arrière.

10. Dispositif (28) permettant l'exécution d'un procédé d'arrêt d'urgence selon l'une des revendications précédentes,
où celui-ci peut être relié avec un capteur (30) permettant la détection d'une vitesse du véhicule ainsi qu'avec un dispositif de commande (32) pour un dispositif d'entraînement du véhicule, ainsi qu'avec un dispositif de commande (34) pour une installation de freinage.
